# EUROPÄISCHE PATENTSCHRIFT

(11) **EP 0 639 588 B1**
(45) Veröffentlichungstag und Bekanntmachung des Hinweises auf die Patenterteilung: **07.01.1998**
(21) Anmeldenummer: 94112375.4
(22) Anmeldetag: 08.08.1994
(51) Int. Cl.: C08F 8/32, B01J 41/14

(54) **Verfahren zur Herstellung schwachbasischer Anionenaustauscher und dafür geeigneter Reagenzien**
Process for the manufacture of weak basic anion exchange resins and reagents therefor
Procédé de préparation de résines échangeurs d'anions faiblement basiques et réactifs appropriés

(30) Priorität: 20.08.1993 DE 4328075
(43) Veröffentlichungstag der Anmeldung: 22.02.1995
(73) Patentinhaber: BAYER AG, 51368 Leverkusen (DE)
(72) Erfinder: Klipper, Reinhold, Dr., D-50933 Köln (DE); Antons, Stefan, Dr., D-51373 Leverkusen (DE); Steffan, Guido, Dr., D-51519 Odenthal (DE); Mitschker, Alfred, Dr., D-51519 Odenthal (DE); Strüver, Werner, Dr., D-51375 Leverkusen (DE); Lütjens, Holger, Dr., D-51065 Köln (DE)

(56) Entgegenhaltungen:
- EP-A- 0 309 861
- DE-B- 1 054 715
- FR-A- 1 415 438
- US-A- 4 478 984

## Beschreibung

Die Erfindung betrifft ein abfallarmes Verfahren zur Herstellung schwachbasischer Anionenaustauscher auf Basis vernetzter Vinylaromat-Polymerisate nach dem Aminomethylierungsverfahren und Verfahren zur Herstellung des dafür geeigneten N-Chlormethylphthalimids.

Schwachbasische Anionenaustauscher sind wasserunlösliche Polymerisate, die primäre und/oder sekundäre und/oder tertiäre Aminogruppen enthalten, wobei die Anionenaustauscher mit primären Aminogruppen als Ausgangsprodukte für die Herstellung der Anionenaustauscher mit sekundären bzw. tertiären Aminogruppen bzw. mit quaternären Ammoniumgruppen dienen.

Für die Herstellung schwachbasischer Anionenaustauscher gibt es zwei technisch ausgereifte Verfahren: 1. das Chlormethylierungsverfahren mit anschließender Aminierung und 2. das Aminomethylierungsverfahren.

Nach dem Chlormethylierungsverfahren stellt man Chlormethylgruppen-haltige vernetzte Vinylaromat-Polymerisate her, die dann mit Aminen oder Polyaminen umgesetzt werden - nachfolgend am Beispiel der Umsetzung von vernetztem Polystyrol mit Monochlordimethylether und nachfolgend mit Dimethylamin dargestellt.

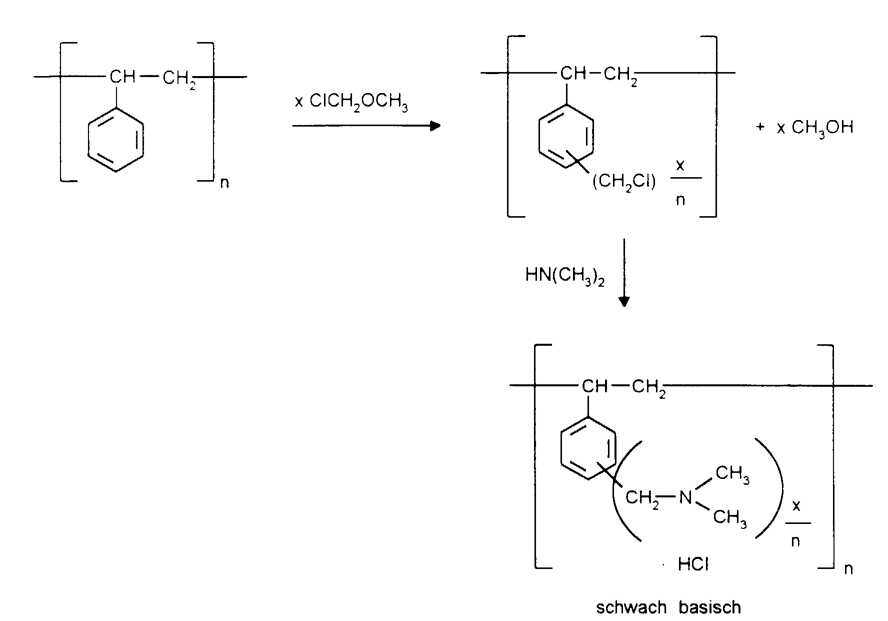

Der Nachteil dieses Verfahrens liegt in einer unvermeidbaren Nebenreaktion, bei der der basische Stickstoff mit mehr als einem Halogenrest reagiert. Dabei entstehen unter Vernetzung quartäre Strukturen mit unerwünschten starkbasischen Ionenaustauschereigenschaften (R.L. Gustafson, Ind. Eng. Chem. Fundam., Vol. 9, No. 2, 1970), wobei die Austauschkapazitäten gemindert werden.

Nach dem Aminomethylierungsverfahren setzt man dagegen Vinylaromat-Polymerisate mit Phthalimidderivaten um und hydratisiert die resultierenden Imide, wie nachfolgendes Schema zeigt: 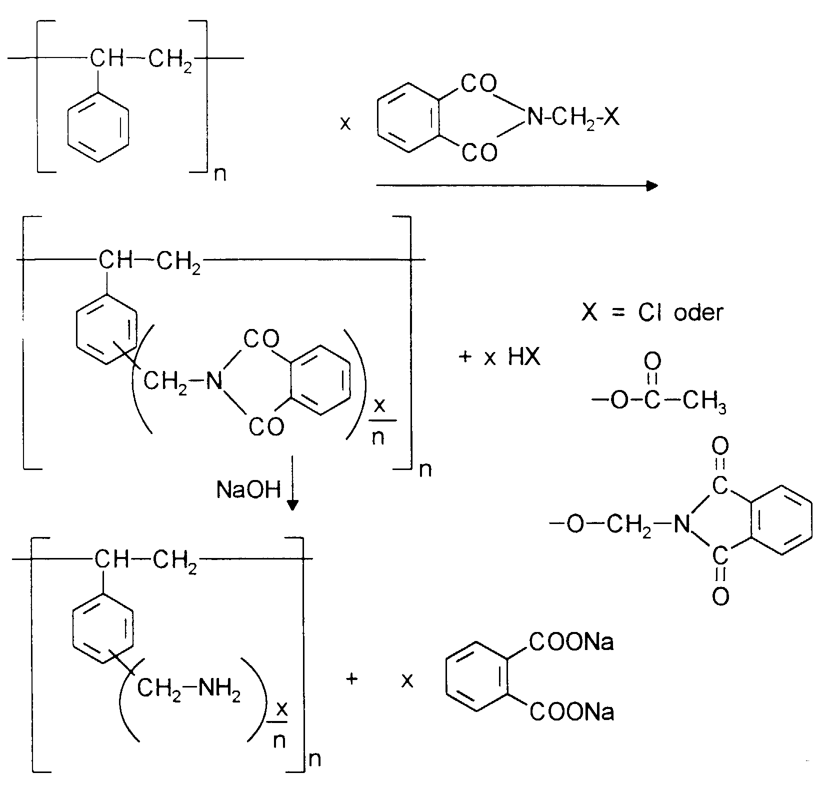 wobei jeweils gilt: n = 0,3 bis 1,5.

Strengere Umweltschutzauflagen legen eine sinnvolle Aufarbeitung der Dinatriumphthalat-Lauge nahe. Um daraus das Aminomethylierungsreagenz herzustellen, sind mehrere Schritte notwendig:
Freisetzung der Phthalsäure aus ihrem Salz, Abtrennen der Phthalsäure von der wäßrigen Phase, Anhydridbildung, Umsetzung des Phthalsäureanhydrids zum Imid und schließlich Umsetzung(en) des Phthalimids zum gewünschten Aminomethylierungsreagenz. Diese Aufarbeitung ist so aufwendig, daß ein starkes Bedürfnis nach einem eleganten Verfahren bestand, wonach anfallende Nebenprodukte in einer übersichtlichen kurzen Reaktionsfolge zu einem der Ausgangsprodukte aufgearbeitet werden können.

Überraschenderweise wird das Problem durch ein Verfahren gelöst, wonach man
a) das vernetzte Vinylaromat-Polymerisat mit N-Chlormethylphthalimid umsetzt,
b) das erhaltene Umsetzungsprodukt mit Methylamin in den schwachbasischen Anionenaustauscher und in N,N'-Dimethylphthalamid spaltet,
c) das N,N'-Dimethylphthalamid zu N-Methylphthalimid cyclisiert und
d) dieses mit Chlor in Gegenwart von Radikalen zum N-Chlormethylphthalimid chloriert.

Die Vinylaromat-Polymerisate sind vernetzt - vorzugsweise durch Copolymerisation mit vernetzenden Monomeren mit mehr als einer, vorzugsweise mit 2 oder 3, copolymerisierbaren C=C-Doppelbindung(en) pro Molekül. Solche vernetzenden Monomeren umfassen beispielsweise polyfunktionelle Vinylaromaten wie Di- und Trivinylbenzole, Divinylethylbenzol, Divinyltoluol, Divinylxylol, Divinylnaphthalin, polyfunktionelle Allylaromaten wie Di- und Triallylbenzole, polyfunktionelle Vinyl- und Allylheterocyclen wie Trivinyl- und Triallylcyanurat und -isocyanurat, N,N'-C₁-C₆-Alkylendiacrylamide und -dimethacrylamide wie N,N'-Methylendiacrylamid und -dimethacrylamid, N,N'-Ethylendiacrylamid und -dimethacrylamid, Polyvinyl- und Polyallylether gesättigter C₂-C₂₀-Polyole mit 2 bis 4 OH-Gruppen pro Molekül, wie z.B. Ethylenglykoldivinyl- und -diallylether und Diethylenglykoldivinyl- und -diallylether, Ester ungesättigter C₃-C₁₂-Alkohole oder gesättigter C₂-C₂₀-Polyole mit 2 bis 4 OH-Gruppen pro Molekül wie Allylmethacrylat, Ethylenglykoldi(meth)acrylat, Glycerintri(meth)acrylat, Pentaerythrittetra(meth)acrylat, Divinylethylenharnstoff, Divinylpropylenharnstoff, Divinyladipat, aliphatische und cycloaliphatische Olefine mit 2 oder 3 isolierten C=C-Doppelbindungen wie Hexadien-1,5, 2,5-Dimethylhexadien-1,5, Octadien-1,7, 1,2,4-Trivinylcyclohexan. Als vernetzende Monomere haben sich Divinylbenzol (als Isomerengemisch) sowie Mischungen aus Divinylbenzol und aliphatischen C₆-C₁₂-Kohlenwasserstoffen mit 2 oder 3 C=C-Doppelbindungen besonders bewährt. Die vernetzenden Monomeren werden im allgemeinen in Mengen von 2 bis 20 Gew.-%, vorzugsweise 2 bis 12 Gew.-%, bezogen auf die Gesamtmenge der eingesetzten polymerisierbaren Monomeren, eingesetzt.

Die vernetzenden Monomeren müssen nicht in reiner Form, sondern können auch in Form ihrer technisch gehandelten Mischungen minderer Reinheit (wie z.B. Divinylbenzol in Mischung mit Ethylstyrol) eingesetzt werden.

Die Aminomethylierung a) kann durch Umsetzung der vernetzten Vinylaromat-Polymerisate mit N-Chlormethylphthalimid in Gegenwart von Quellungsmitteln für vernetzte Vinylaromat-Polymerisate und Friedel-Crafts-Katalysatoren erfolgen (DE-AS 1 054 715), wobei das Phthalimid-Derivat in für die gewünschte Substitutionshöhe (0,3 bis 2,0 Substitutionen pro aromatischem Kern) der im vernetzten Vinylaromat-Polymerisat vorliegenden aromatischen Kerne geeigneten Mengen (oder bis zu 20 %, vorzugsweise bis zu 10 % Überschuß) eingesetzt wird.

Geeignete Quellungsmittel umfassen halogenierte Kohlenwasserstoffe, vorzugsweise chlorierte C₁-C₄-Kohlenwasserstoffe. Das bevorzugteste Quellungsmittel ist 1,2-Dichlorethan.

Bevorzugte Friedel-Crafts-Katalysatoren umfassen beispielsweise AlCl₃, BF₃, FeCl₃, ZnCl₂, TiCl₄, ZrCl₄, SnCl₄, H₃PO₄, HF und HBF₄. Man kann die Katalysatoren in Mengen von 0,01 bis 0,1 Mol pro Mol N-Chlormethylphthalimid einsetzen.

Man kann die Reaktion beispielsweise so durchführen, daß man das vernetzte Vinylaromat-Polymerisat in eine Lösung von N-Chlormethylphthalimid in einem Quellungsmittel einträgt und die Reaktanden in Gegenwart des Katalysators bei erhöhter Temperatur, in der Regel bei 50 bis 100, vorzugsweise 50 bis 75°C einwirken läßt, bis die Chlorwasserstoff-Entwicklung im wesentlichen beendet ist. Dies ist im allgemeinen nach 2 bis 20 Stunden der Fall. Nach dem Trennen von substituiertem Vinylaromat-Polymerisat und flüssigem Reaktionsmedium und anorganischen Produkten empfiehlt es sich, das Vinylaromat-Polymerisat in wäßriger Kochsalzlösung aufzunehmen und Quellungsmittelreste destillativ zu entfernen.

Die Spaltung b) des substituierten Vinylaromat-Polymerisats mit Hilfe von Methylamin erfordert mindestens 2, vorzugsweise mindestens 3 Mol Methylamin pro Mol Phthalimidomethylgruppe. Die Reaktionstemperatur beträgt vorzugsweise 110 bis 150°C, der Druck vorzugsweise 10 bis 100 bar. Nach einer bevorzugten Ausführungsform führte man die Umsetzung in überschüssigem Methylamin als Reaktionsmedium durch. Der Fortgang der Reaktion kann analytisch verfolgt werden, beispielsweise durch Titration der entstandenen primären Aminogruppen mit verdünnter Salzsäure. Die Reaktion ist in der Regel nach 2 bis 20 Stunden beendet. Nach Abziehen des überschüssigen Methylamins kann das entstandene N,N'-Dimethylphthalamid mit einem geeigneten organischen Lösungsmittel aufgenommen und vom schwachbasischen Anionenaustauscher abgetrennt werden. Geeignete Lösungsmittel sind beispielsweise organische Flüssigkeiten mit Siedetemperaturen zwischen 40 und 130°C; bevorzugte Lösungsmittel sind aliphatische einwertige C₁-C₄-Alkohole wie Methanol, Ethanol, Isopropanol und die verschiedenen Butanole.

Es empfiehlt sich, das Lösungsmittel abzuziehen, bevor das Dimethylphthalamid in die Reaktion c) eingesetzt wird. Die Reaktion c) ist im Prinzip bekannt; vgl. Spring, Woods, J. Chem. Soc. 1945, 625-628. Die Umsetzung kann entweder thermisch oder in Gegenwart von Wasser erfolgen. Die thermische Cyclisierung erfolgt vorzugsweise bei Temperaturen von 100 bis 250°C, insbesondere 150 bis 220°C. Die Reaktion kann in einem organischen Lösungsmittel durchgeführt werden; vorzugsweise erfolgt die Reaktion in der Schmelze unter Abdestillieren von abgespaltenem Methylamin. Die Reaktion kann als beendet betrachtet werden, sobald die Entwicklung von Methylamin zu Ende ist. Der Rückstand kann gereinigt werden, beispielsweise durch Umkristallisieren oder durch Sublimation.

Die Chlorierung d) des N-Methylphthalimids erfolgt mit mindestens äquimolaren Mengen Chlor; vorzugsweise werden bis zu 20 % Überschuß an Chlor eingesetzt. Die Reaktion wird durch die Gegenwart von Radikalbildnern beschleunigt. Als solche eignen sich beispielsweise Diacylperoxide wie Diacetylperoxid, Dibenzoylperoxid, Di-p-chlorbenzoylperoxid, Peroxyester wie tert.-Butylperoxyacetat, tert.-Butyl-peroxybenzoat, Dicyclohexylperoxydicarbonat, Alkylperoxide wie Bis-(tert -Butylperoxybutan), Dicumylperoxid, tert -Butylcumylperoxid, Hydroperoxide wie Cumolhydroperoxid, tert.-Butylhydroperoxid, Ketonperoxide wie Cyclohexanon-hydroperoxid, Methylethylketonhydroperoxid, Acetylacetonperoxid oder - vorzugsweise Azoisobutyrodinitril.

Die Radikalbildner können in katalytischen Mengen, d.h. vorzugsweise 0,01 bis 2 Gew.-%, bezogen auf N-Methylphthalimid, eingesetzt werden.

Die Reaktion d) wird vorzugsweise bei erhöhter Temperatur, im allgemeinen bei 45 bis 180°C durchgeführt. Es ist möglich, die Reaktion in einem organischen Lösungsmittel durchzuführen; vorzugsweise wird die Reaktion in der Schmelze durchgeführt. Die Reaktion ist beendet, sobald kein Chlor mehr aufgenommen wird; dies ist in der Regel nach 2 bis 8 Stunden der Fall. Das entstandene N-Chlormethylphthalimid kann ohne weitere Reinigung in den Reaktionsschritt a) eingesetzt werden.

Das gesamte Reaktionsschema wird nachfolgend am Beispiel eines Polystyrols verdeutlicht:

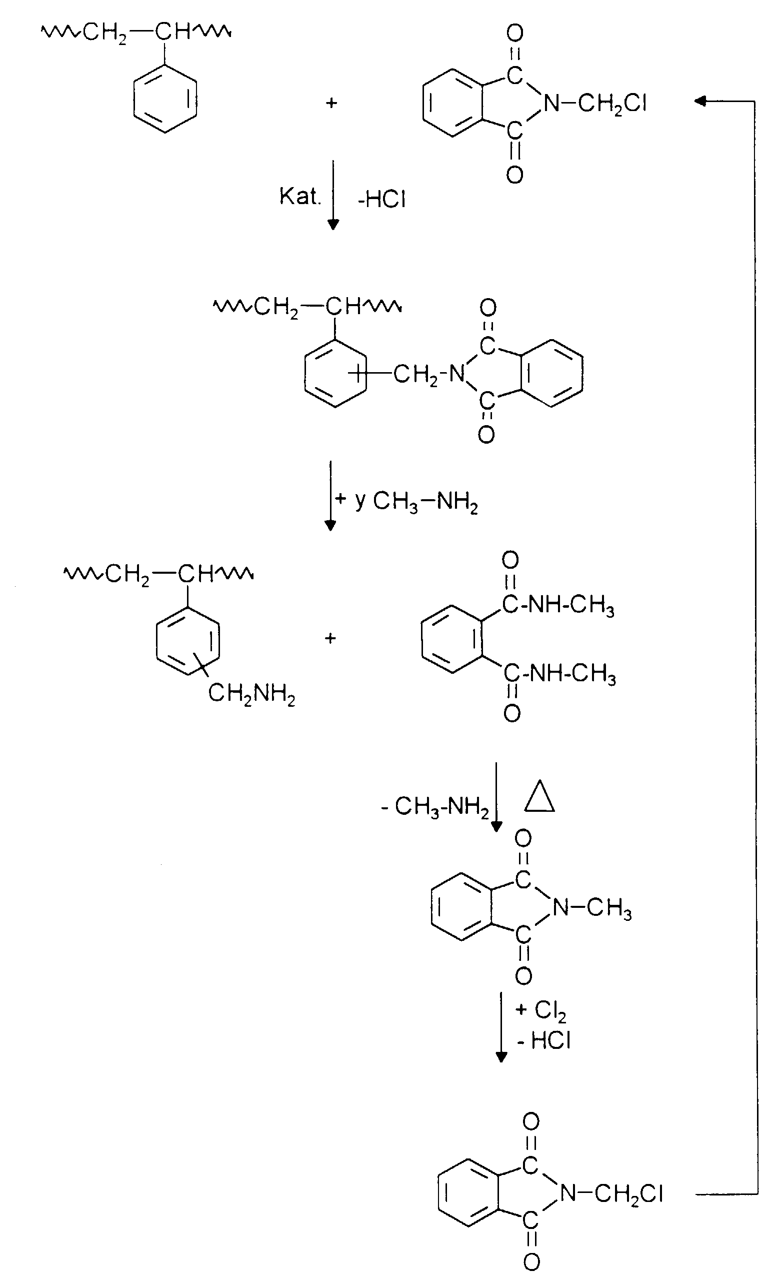

Gegenstand der Erfindung ist also ein Verfahren zur Herstellung schwachbasischer Anionenaustauscher auf Basis vernetzter Vinylaromat-Polymerisate enthaltend kernständige primäre Aminomethylgruppen durch Umsetzung (i) vernetzter Vinylaromat-Polymerisate enthaltend kern ständige Phthalimidomethylgruppen mit (ii) Methylamin bei erhöhter Temperatur unter Druck.

Weiterer Gegenstand der Erfindung ist ein Verfahren zur Herstellung von N-Chlormethylphthalimid durch Chlorierung von N-Methylphthalimid mit Chlor in Gegenwart von Radikalbildnern bei erhöhter Temperatur.

Schließlich ist ein weiterer Gegenstand der Erfindung ein Verfahren zur Herstellung schwachbasischer Anionenaustauscher auf Basis vernetzter Vinylaromat-Polymerisate enthaltend kernständige primäre Aminomethylgruppen, wonach man
a) vernetztes Vinylaromat-Polymerisat mit N-Chlormethylphthalimid umsetzt,
b) das erhaltene Umsetzungsprodukt mit Methylamin in Anionenaustauscher und N,N'-Dimethylphthalamid spaltet,
c) das erhaltene N,N'-Dimethylphthalamid zu N-Methylphthalimid cyclisiert und
d) dieses mit Chlor in Gegenwart von Radikalbildnern chloriert.

Die nach den erfindungsgemäßen Verfahren erhältlichen schwachbasischen Anionenaustauscher enthalten -CH₂-NH₂-Gruppen; sie können als solche zum lonenaustausch eingesetzt werden oder mit Alkylierungsmitteln, wie Methylchlorid, oder mit Formaldehyd/Ameisensäure (Leuckart-Wallach) zu den quaternären Ammoniumsalzen bzw. den tertiären Aminen umgesetzt werden, wobei die tertiären Amine, falls gewünscht, mit Alkylierungsmitteln wie Chlorethanol zu quaternären Ammoniumsalzen umgesetzt werden können.

Schwachbasische Anionenaustauscher mit -CH₂NH₂-Gruppen können weiter umgesetzt werden mit dem Natriumsalz der Monochloressigsäure zu Chelatharzen von Iminodiessigsäuretyp oder mit Thioharnstoff zu Harzen mit Thioharnstoffunktionen oder mit HCHO/Phosphor(III) zu Harzen mit Aminomethylphosphonsäuregruppen.

Weiterer Gegenstand der Erfindung ist also die Verwendung der erfindungsgemäß erhältlichen Anionenaustauscher enthaltend -CH₂-NH₂-Gruppen zur Herstellung von Harzen enthaltend tertiäre Aminomethylgruppen und/oder quaternäre Ammoniumgruppen und/oder Iminodiensäuregruppen. Diese Harze können als Anionenaustauscher bzw. als Adsorberharze eingesetzt werden.

### Beispiele

### Reaktion a)

In 600 ml 1,2-Dichlorethan werden 97 g N-Chlormethylphthalimid (0,5 Mol) bei Raumtemperatur eingetragen und gelöst. Dann gibt man 60 g (0,57 Mol) eines vernetzten Perlpolymerisates auf Basis Styrol/Divinylbenzol mit einem Divinylbenzolgehalt von 4 Gew.-% zu. Die Suspension wird 1 Stunde bei Raumtemperatur gerührt. Dann dosiert man in 30 Minuten 0,05 Mol Zinntetrachlorid zu, erhitzt den Ansatz auf Rückflußtemperatur und rührt weitere 10 Stunden bei dieser Temperatur.

Nach dem Abkühlen wird die Reaktionsbrühe abgezogen. Man setzt wäßrige NaCl-Lösung zu und destilliert Reste von 1,2-Dichlorethan ab.

### Reaktion b)

In einem 1,3 l Autoklaven wurden 100 g des getrockneten Harzes aus Reaktion a) in 400 ml Methylamin bei 120°C 8 Stunden gerührt (p = 37-38 bar). Nach dem Abkühlen auf Raumtemperatur wurde das Methylamin langsam in einen zweiten Autoklaven überführt (Restdruck: 4,5 bar). Anschließend wurde das Harz nochmals mit 400 ml Methylamin 8 Stunden bei 120°C umgesetzt und wie zuvor beschrieben verfahren.

Der nach dem Verdampfen des Methylamins verbliebene Rückstand wurde zur Entfernung von Restmengen von Methylamin bei 80°C getrocknet.
Auswaage an N,N'-Dimethylphthalamid nach 1. Umsetzung: 55,7 g (84 % d.Th.)
Auswaage an N,N'-Dimethylphthalamid nach 2. Umsetzung: 11,6 g
Gesamtmenge N,N'-Dimethylphthalamid: 67,3 g (100 % d.Th.)
Auswaage an Anionenaustauscher: 54,5 g (99,2 % d.Th.)
Totalkapazität: 3,0 Mol/l
Substitution: 0,77 pro aromatischen Kern
Der erhaltene schwachbasische Anionenaustauscher wurde mit Methylchlorid zum stark basischen Anionenaustauscher umgesetzt.
Totalkapazität: 1,26 Mol/l.

### Reaktion c)

In einem 100 ml Dreihalskolben werden 19,7 g N,N'-Dimethylphthalamid vorgelegt und auf 183°C erhitzt. Bei dieser Temperatur wird der Ansatz 21 Stunden gehalten. Während des Aufheizens destilliert Methylamin ab.

Nach dem Abkühlen verbleibt im Kolben ein brauner Rückstand, der nach Sublimation als weißer Feststoff anfällt.

Dieser Feststoff besitzt folgende Zusammensetzung nach HPLC:
9,1 Gew.-% N,N'-Dimethylphthalamid,
1,1 Gew.-% 4-Methylbenzylamin,
89,8 Gew.-% N-Methylphthalimid.

### Reaktion d)

In einem 0,5 l-Vierhalskolben mit Rührer, Thermometer, Rückflußkühler und Gaseinleitungsrohr wurden 322 g (2 Mol) N-Methylphthalimid bei 170°C aufgeschmolzen. Bei 150 bis 155°C Innentemperatur wurden innerhalb von 4,5 Stunden 160 g (2,2 Mol) Chlor und 1 g Azobisisobutyronitril (als 5 gew.-%ige Lösung in Dichlormethan) zugegeben. Die heiße Schmelze wurde auf eine Aluminiumfolie gegossen und erstarrte.
- Ausbeute:: 370 g enthaltend 346 g N-Chlormethylphthalimid entsprechend 88,5 % d.Th.

## Patentansprüche

1. Verfahren zur Herstellung schwachbasischer Anionenaustauscher auf Basis vernetzter Vinylaromat-Polymerisate enthaltend kernständige primäre Aminomethylgruppen durch Umsetzung (i) vernetzter Vinylaromat-Polymerisate enthaltend kernständige Phthalimidomethylgruppen mit (ii) Methylamin bei erhöhter Temperatur unter Druck.

2. Verfahren nach Anspruch 1, wonach man pro Mol Phthalimidomethylgruppen mindestens 2 Mol Methylamin umsetzt.

3. Verfahren nach Anspruch 1 bei Temperaturen von 110 bis 150°C.

4. Verfahren nach Anspruch 1 bei Drucken von 10 bis 100 bar.

5. Verfahren zur Herstellung von N-Chlormethylphthalimid durch Chlorierung von N-Methylphthalimid mit Chlor in Gegenwart von Radikalbildnern bei erhöhter Temperatur.

6. Verfahren nach Anspruch 5 bei Temperaturen von 45 bis 180°C.

7. Verfahren zur Herstellung schwachbasischer Anionenaustauscher auf Basis vernetzter Vinylaromat-Polymerisate enthaltend kernständige primäre Aminomethylgruppen, wonach man
a) vernetztes Vinylaromat-Polymerisat mit N-Chlormethylphthalimid umsetzt,
b) das erhaltene Umsetzungsprodukt gemäß Verfahren nach Anspruch 1 in Anionenaustauscher und N,N'-Dimethylphthalamid spaltet,
c) das erhaltene N,N'-Dimethylphthalamid zu N-Methylphthalimid cyclisiert und
d) dieses gemäß Verfahren nach Anspruch 5 chloriert.

8. Anwendung des Verfahrens gemäß Ansprüchen 1 und 7 zur Herstellung von Anionenaustauschern enthaltend sekundäre oder tertiäre Aminomethylgruppen und/oder quaternäre Ammoniumgruppen.

## Claims

1. Process for preparing weakly-basic anion exchangers based on crosslinked vinylaromatic polymers containing ring-bonded primary aminomethyl groups by reaction of (i) crosslinked vinylaromatic polymers containing ring-bonded phthalimidomethyl groups with (ii) methylamine at elevated temperature under pressure.

2. Process according to Claim 1, wherein at least 2 mol of methylamine are reacted per mol of phthalimidomethyl groups.

3. Process according to Claim 1, at temperatures of from 110 to 150°C.

4. Process according to Claim 1, at pressures of from 10 to 100 bar.

5. Process for preparing N-chloromethylphthalimide by chlorination of N-methylphthalimide with chlorine in the presence of free-radical formers at elevated temperature.

6. Process according to Claim 5, at temperatures of from 45 to 180°C.

7. Process for preparing weakly-basic anion exchangers based on crosslinked vinylaromatic polymers containing ring-bonded primary aminomethyl groups, wherein
a) crosslinked vinylaromatic polymer is reacted with N-chloromethylphthalimide,
b) the reaction product obtained is cleaved by the process according to Claim 1 into anion exchangers and N,N'-dimethylphthalamide,
c) the N,N'-dimethylphthalamide obtained is cyclized to N-methylphthalimide and
d) this is chlorinated by the process according to Claim 5.

8. Use of the process according to Claims 1 and 7 for the preparation of anion exchangers containing secondary or tertiary aminomethyl groups and/or quaternary ammonium groups.

## Revendications

1. Procédé de préparation d'échangeurs anioniques faiblement basiques à base de polymères vinylaromatiques réticulés contenant des groupes aminométhyles primaires sur le noyau par réaction (i) de polymères vinylaromatiques réticulés contenant des groupes phtalimidométhyles sur le noyau avec (ii) de la méthylamine à haute température sous pression.

2. Procédé selon la revendication 1, où on fait réagir par mole de groupes phtalimidométhyles au moins 2 mol de méthylamine.

3. Procédé selon la revendication 1 à des températures de 110 à 150°C.

4. Procédé selon la revendication 1 à des pressions de 10 à 100 bars.

5. Procédé de préparation de N-chlorométhylphtalimide par chloration de N-méthylphtalimide avec du chlore en présence de formateurs de radicaux à température élevée.

6. Procédé selon la revendication 5 à des températures de 45 à 180°C.

7. Procédé de préparation d'échangeurs anioniques faiblement basiques à base de polymères vinylaromatiques réticulés contenant des groupes aminométhyles primaires sur le noyau où
a) on fait réagir du polymère vinylaromatique réticulé avec du N-chlorométhylphtalimide,
b) on coupe le produit de réaction obtenu selon le procédé de la revendication 1 en l'échangeur anionique et le N,N'-diméthylphtalamide,
c) on cyclise le N,N'-diméthylphtalamide en N-méthylphtalimide et
d) on le chlore selon le procédé de la revendication 5.

8. Utilisation du procédé selon les revendications 1 et 7 pour préparer des échangeurs anioniques contenant des groupes aminométhyles secondaires ou tertiaires et/ou des groupes ammonium quaternaire.
